# FASCICULE DE BREVET EUROPEEN

(11) **EP 2 143 639 B1**
(45) Date de publication et mention de la délivrance du brevet: **21.12.2011**
(21) Numéro de dépôt: 09162144.1
(22) Date de dépôt: 08.06.2009
(51) Int. Cl.: B64G 1/00, B64G 1/10, B64G 1/24, B64G 1/62

(54) **Procédé pour alléger la masse de carburant embarquée lors d'une mission interplanétaire**
Verfahren zum Verringern der mitgeführten Treibstoffmasse bei einer interplanetaren Mission
Method for reducing the mass of fuel boarded during an interplanetary mission

(30) Priorité: 08.07.2008 FR 0803878
(43) Date de publication de la demande: 13.01.2010
(73) Titulaire: THALES, 92200 Neuilly-sur-Seine (FR)
(72) Inventeur: Sainct, Hervé, 06110, LE CANNET (FR); Roser, Xavier, 06400, CANNES (FR); Martinot, Vincent, 31270, VILLENEUVE/TOLOSANE (FR)
(74) Mandataire: Nguyen, Dominique

(56) Documents cités:
- WO-A-00/13971
- WO-A-92/21561
- US-A1- 2003 164 428
- US-B1- 6 491 258

## Description

La présente invention concerne un procédé pour alléger la masse de carburant embarquée lors d'une mission interplanétaire. Elle s'applique notamment au domaine des engins spatiaux interplanétaires, tels que, par exemple, pour une mission d'exploration de la planète Mars, en vol aller et retour.

On connaît le document WO 92/21561 A1, qui est considéré comme l'art antérieur le plus proche et divulgue un procédé pour mener des missions d'exploration planetaire.

Le retour d'un équipage et/ou d'échantillons de matière d'une planète éloignée vers la Terre nécessite entre autres d'envoyer un engin spatial, appelé orbiteur, vers la planète à explorer et de faire revenir cet engin spatial sur la Terre. Cette opération entraîne au cours du voyage, plusieurs manoeuvres importantes et une consommation de masse de carburant associée puisqu'il faut, notamment, que l'engin spatial accélère pour décoller de la Terre, puis freine avant son arrivée sur la planète à explorer, accélère de nouveau pour quitter la planète et enfin freine avant d'arriver sur Terre.

La consommation de carburant étant d'une part très importante pendant les périodes de fortes variations de vitesse, c'est-à-dire pendant les différentes phases de décollage et d'atterrissage, et d'autre part d'autant plus élevée que la masse totale de l'engin est grande, ces variations de vitesse successives créent une amplification exponentielle des besoins en carburant, appelé effet « boule de neige », et donc de la masse à emporter. Typiquement, la masse de carburant nécessaire pour une mission interplanétaire est supérieure à la masse utile, appelée masse sèche, de l'engin spatial.

La masse de carburant à emporter étant très importante, elle impacte énormément sur les coûts de la mission interplanétaire ainsi que sur la taille et la masse de l'engin spatial orbiteur en exigeant lors du départ, par exemple, un lanceur fusée plus gros donc plus coûteux.

Pour réduire la masse de carburant à emporter pour une mission interplanétaire, il est connu d'utiliser, pour le retour sur Terre, une capsule de rentrée passive aéro-thermo-dynamique qui dissipe son énergie directement dans l'atmosphère terrestre pendant une phase de réentrée. Cette capsule de rentrée permet de s'affranchir de la dernière phase de freinage avant l'atterrissage sur Terre mais présente des risques d'accidents très critiques pour l'environnement terrestre, notamment lorsque la mission consiste à rapporter des échantillons de matières telle que par exemple, la mission américaine Génésis qui n'a pas réussi sa phase d'atterrissage sur Terre alors qu'elle ramenait des échantillons de poussières d'une comète.

La présente invention a pour but de remédier à ces inconvénients en proposant un procédé permettant d'économiser la masse de carburant à emporter pour une mission interplanétaire et ne présentant pas les dangers des capsules passives, pour l'environnement terrestre.

A cet effet, l'invention a pour objet un procédé pour alléger la masse de carburant embarquée lors d'une mission interplanétaire, caractérisé en ce qu'il consiste :
- à lancer un premier engin spatial orbiteur de la Terre sur une première trajectoire interplanétaire vers une planète cible à explorer,
- à lancer un deuxième engin spatial orbiteur de la Terre sur une deuxième trajectoire interplanétaire vers un lieu de rendez-vous, la deuxième trajectoire interplanétaire ne comportant pas de phase de mise en orbite autour de la planète cible,
- à récupérer un chargement à transporter et à le charger sur le premier engin spatial orbiteur,
- à faire revenir le premier engin spatial orbiteur et le chargement de la planète cible jusqu'au lieu de rendez-vous
- à établir un accostage des deux engins spatiaux orbiteurs,
- à faire revenir au moins le deuxième engin spatial orbiteur et le chargement, du lieu de rendez-vous jusqu'à une orbite terrestre.

Avantageusement, le premier engin spatial orbiteur comporte, lors de son lancement de la Terre, une masse de carburant correspondant uniquement à la masse nécessaire à l'accomplissement d'une première partie de la mission qui se termine au lieu de rendez-vous, au moment de l'accostage.

Avantageusement, le deuxième engin spatial orbiteur comporte une masse de carburant lui permettant de prendre le relais du premier engin spatial orbiteur à partir de l'accostage et de terminer la mission du lieu de rendez-vous jusqu'au retour en orbite terrestre.

Avantageusement, le procédé consiste en outre à utiliser au moins une assistance gravitationnelle d'une planète ou d'une lune située sur la deuxième trajectoire interplanétaire pour diminuer encore la masse de carburant nécessaire à l'accomplissement de la mission.

Selon un premier mode de réalisation de l'invention, après la phase d'accostage, les deux engins spatiaux orbiteurs reviennent ensembles jusqu'à l'orbite terrestre.

Avantageusement, la masse de carburant nécessaire pour le retour des deux engins spatiaux orbiteurs du lieu de rendez-vous jusqu'à l'orbite terrestre est placée sur le deuxième engin spatial orbiteur.

Selon un deuxième mode de réalisation de l'invention, le procédé consiste en outre, après la phase d'accostage, à décharger le chargement du premier engin spatial orbiteur dans le deuxième engin spatial orbiteur, puis à abandonner le premier engin spatial orbiteur.

Préférentiellement, le chargement est récupéré par l'intermédiaire d'une première fusée ou une première navette spatiale lancée de la planète cible vers le premier engin spatial orbiteur et le premier engin spatial orbiteur est laissé en orbite autour de la planète cible pendant la récupération du chargement.

Préférentiellement, le chargement est déchargé par l'intermédiaire d'un troisième engin spatial, choisi parmi une station spatiale, une deuxième fusée ou une deuxième navette spatiale lancée de la Terre vers le deuxième engin spatial, le deuxième engin spatial orbiteur, seul ou amarré au premier engin spatial orbiteur, étant laissé en orbite autour de la Terre.

Préférentiellement, le lieu de rendez-vous est localisé sur une orbite de rencontre située entre la planète cible et la Terre.

Avantageusement, le chargement est constitué par des passagers et/ou des échantillons de matières prélevés sur la planète cible.

D'autres particularités et avantages de l'invention apparaîtront clairement dans la suite de la description donnée à titre d'exemple purement illustratif et non limitatif, en référence aux dessins schématiques annexés qui représentent :
- figure 1 : une vue schématique simplifiée d'un exemple de l'évolution de la masse de carburant au cours d'une mission interplanétaire, selon l'art antérieur;
- figure 2 : une vue schématique simplifiée de l'évolution de la masse de carburant au cours d'une mission interplanétaire, selon l'invention;
- figure 3 : un premier exemple de trajectoire d'un premier engin spatial orbiteur, selon l'invention ;
- figure 4 : un premier exemple de trajectoire d'un deuxième engin spatial orbiteur, selon l'invention ;
- figure 5 : un deuxième exemple de trajectoires des deux engins spatiaux orbiteurs utilisant des manoeuvres d'assistance gravitationnelle pour accélérer ou freiner les engins spatiaux orbiteurs, selon l'invention.

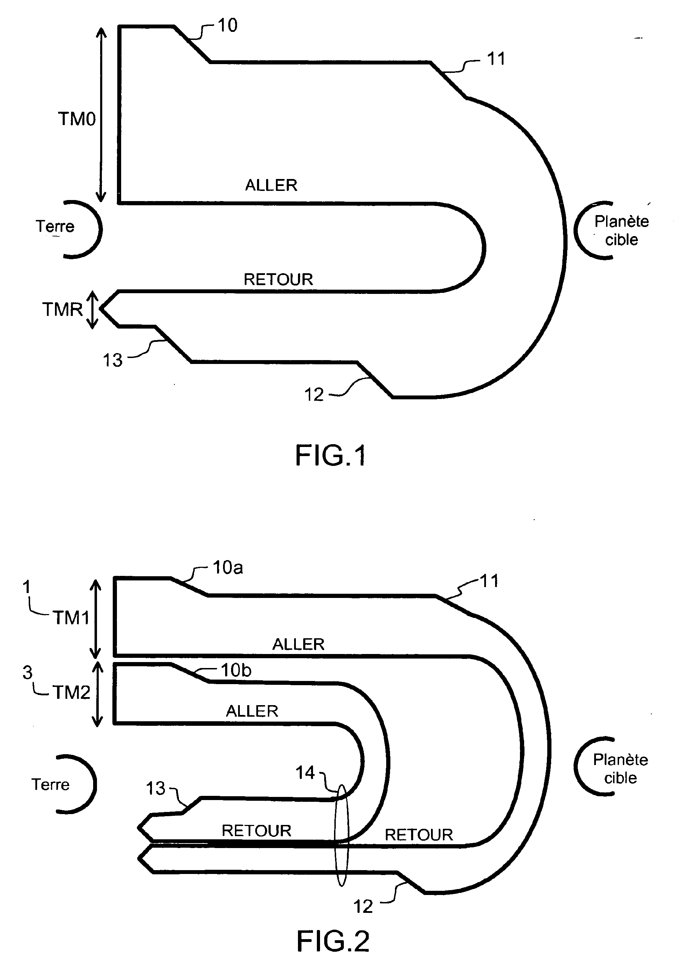

En se référant à la figure 1, la masse totale TM0 de carburant embarquée au lancement par un engin spatial orbiteur diminue brutalement une première fois lors de la phase de libération de l'engin par rapport à la Terre et de son orientation 10 correspondant à une première variation de vitesse égale à Delta V1 et une deuxième fois lors de la phase de freinage 11 à l'approche de la planète cible et d'atterrissage sur celle-ci correspondant à une deuxième variation de vitesse égale à Delta V2. Lors du trajet de retour de l'engin spatial vers la Terre, la masse totale de carburant diminue fortement une troisième fois lors de la phase de départ 12 de la planète cible correspondant à une troisième variation de vitesse égale à Delta V3, puis une quatrième fois lors d'une phase de freinage et d'atterrissage 13 sur Terre correspondant à une quatrième variation de vitesse égale à Delta V4.

Lors de l'arrivée sur Terre, la masse restante TMR à bord de l'engin spatial correspond à la masse intrinsèque de l'engin spatial à laquelle s'ajoute la masse des éventuels passagers et/ou des échantillons de matières prélevés sur la planète cible. La masse de carburant est généralement entièrement consommée pendant le trajet aller et retour de l'engin entre la Terre et la planète cible.

Pendant chacune des trois premières phases du vol de l'engin, la consommation de carburant a été accrue en raison du surplus de masse de carburant embarquée pour réaliser les opérations de freinage et d'atterrissage lors de la quatrième phase. En effet, pendant chacune des trois premières phases, la masse totale de l'engin à freiner ou à accélérer est augmentée de la masse de carburant nécessaire à la quatrième phase à laquelle il faut ajouter le surplus de masse de carburant nécessaire pour réaliser l'accélération ou le freinage d'une masse plus importante. Ce phénomène est appelé effet « boule de neige ».

A ces quatre phases principales qui sont les plus grandes consommatrices de carburant, s'ajoutent des opérations intermédiaires comportant des manoeuvres dans l'espace et dans l'orbite des planètes qui augmentent l'effet « boule de neige ».

En se référant à la figure 2, selon l'invention, un premier engin spatial orbiteur 1 ayant une masse totale TM1 est envoyé sur une première trajectoire interplanétaire vers la planète cible à explorer et un deuxième engin spatial orbiteur 2 ayant une masse totale TM2 est envoyé sur une deuxième trajectoire interplanétaire conduisant vers un lieu de rendez-vous prédéterminé pouvant être situé par exemple, bien que ce ne soit pas indispensable, sur une orbite interplanétaire de rencontre 30. L'orbite interplanétaire de rencontre 30 est préférentiellement localisée entre la planète cible et la Terre et peut par exemple, bien que ce ne soit pas indispensable, croiser l'orbite de la planète cible et l'orbite de la Terre. A titre de variante, l'orbite de rencontre pourrait également être située par exemple, à mi-chemin entre la planète cible et la Terre ou encore être positionnée sur l'orbite de la planète cible. Préférentiellement, la deuxième trajectoire interplanétaire ne comporte pas de phase de mise en orbite autour de la planète cible. Le deuxième orbiteur rejoint le lieu de rendez-vous mais à aucun moment, ni avant, ni pendant, ni après la rencontre, il ne se met en orbite autour de la planète cible car cela imposerait des opérations successives de freinage et d'accélération qui sont des phases grandes consommatrices de carburant. Le lancement 10b du deuxième engin spatial orbiteur 2 peut être réalisé indifféremment avant ou après le lancement 10a du premier engin spatial orbital 1 mais certains créneaux de lancement sont préférables car plus économiques pour parvenir au lieu de rendez-vous prédéterminé. Avantageusement, le premier engin spatial 1 embarque au lancement, une masse de carburant juste nécessaire à l'accomplissement d'une première partie de la mission correspondant aux trois premières phases du vol, 10a, 11, 12. La masse de carburant nécessaire à la quatrième phase du vol correspondant au freinage et à la mise en orbite 13 autour de la Terre, est embarquée à bord du deuxième engin spatial orbiteur. A partir de son lancement, le deuxième engin orbiteur 2 évolue sur sa propre trajectoire, vers le lieu de rendez-vous, par exemple situé sur l'orbite interplanétaire de rencontre 30, jusqu'à ce que le premier engin orbiteur 1 le rejoigne. Lorsque la rencontre sur le lieu de rendez-vous est réalisée, le premier engin orbiteur a épuisé la masse de carburant qu'il avait emporté lors de son lancement. Le deuxième engin orbiteur prend alors le relais pour accomplir et terminer la quatrième phase 13 de la mission.

Selon un premier mode de réalisation de l'invention, lors du trajet de retour du premier engin spatial orbiteur 1 vers la Terre, lorsque le premier engin spatial orbiteur 1 rejoint le deuxième engin spatial orbiteur 2 sur le lieu de rendez-vous, les deux engins orbiteurs 1, 2 sont amarrés 14 ensembles, puis les deux engins spatiaux reviennent ensembles vers la Terre, le deuxième engin spatial orbiteur 2 fournissant le carburant nécessaire pour le retour, le freinage et la mise en orbite 13 des deux engins amarrés autour de la Terre. La masse du premier engin spatial 1 au moment de l'amarrage des deux engins spatiaux orbiteurs 1, 2, est égale à sa masse intrinsèque augmentée de la masse d'un éventuel chargement tel que par exemple, des éventuels passagers et/ou échantillons de matière prélevés sur la planète cible.

Selon un deuxième mode de réalisation de l'invention, lors du trajet de retour du premier engin spatial vers la Terre, lorsque le premier engin spatial orbiteur 1 rejoint le deuxième engin spatial orbiteur 2 sur le lieu de rendez-vous, les deux engins orbiteurs 1, 2 sont amarrés 14 ensembles, le deuxième engin spatial orbiteur 2 récupère le chargement tel que par exemple, les passagers et/ou les échantillons de matière prélevés sur la planète cible par le premier engin orbiteur 1, les deux engins orbiteurs 1, 2 sont ensuite désolidarisés et le deuxième engin orbiteur 2 revient seul vers la Terre, le premier engin orbiteur 1 étant abandonné dans l'espace. Ce deuxième mode de réalisation de l'invention permet de réduire encore la masse de carburant nécessaire à la mission d'exploration mais nécessite une opération de transfert des passagers et/ou des échantillons prélevés. Avantageusement, pour économiser du carburant supplémentaire, pendant l'opération de transfert et/ou de chargement, le premier engin spatial orbiteur 1 reste en orbite autour de la planète cible et ne se pose pas sur cette planète. De même, préférentiellement, lors du retour en orbite terrestre, le deuxième engin spatial orbiteur 2, ou un sous-ensemble de celui-ci, ne se pose pas sur la Terre mais reste en orbite autour de la Terre. La récupération des échantillons et/ou des passagers peut être réalisée, par exemple, par l'intermédiaire de deux fusées ou de deux navettes spatiales, faisant l'aller et le retour d'une part, entre la planète cible et le premier engin orbiteur en orbite autour de la planète cible et d'autre part, entre la Terre et le deuxième engin orbiteur, ou le cas échéant, l'ensemble des deux engins orbiteurs amarrés, en orbite autour de la Terre.

L'utilisation de deux engins spatiaux orbiteurs indépendants envoyés sur deux trajectoires différentes et optimisées avec un point de rendez-vous pour transférer un chargement ou assembler lesdits engins spatiaux orbiteurs permet donc de répartir la masse de carburant sur les deux engins spatiaux orbiteurs et d'éviter l'effet « boule de neige » dû à la quatrième phase de la mission. Cela permet alors d'économiser la masse de carburant supplémentaire liée à cet effet « boule de neige » et de baisser le coût de la mission par rapport à l'utilisation d'un seul engin orbiteur.

Ainsi, la masse totale TM1 + TM2 embarquée sur le premier engin spatial orbiteur 1 et sur le deuxième engin spatial orbiteur 2 est inférieure à la masse totale TM0 qui serait embarquée si un seul engin spatial orbital était envoyé sur la planète cible. En outre, les deux masses TM1 et TM2 de chaque engin orbiteur sont bien plus faibles que la masse totale TM0 d'un engin orbiteur de l'art antérieur, ce qui présente l'avantage de permettre l'utilisation de deux engins orbiteurs plus petits lancés par des fusées plus petites donc moins chères.

Alternativement, cela permet également, le cas échéant, dans un autre type de mission consistant par exemple à ramener une masse d'échantillons et /ou un nombre de passagers plus important, de pouvoir disposer d'une capacité à ramener cette masse supplémentaire sans augmenter la taille, donc le coût, des fusées de lancement des engins orbiteurs par rapport à l'art antérieur.

Les différentes manoeuvres de freinage et d'accélération réalisées pendant l'évolution des engins orbiteurs le long de leurs trajectoires respectives peuvent être actionnées par des actions impulsionnelles, c'est-à-dire sous forme de fortes poussées de durée brève, en utilisant des moyens de propulsion chimique, ou peuvent être actionnées par des actions de plus faibles poussées de durée longue, en utilisant des moyens de propulsion plasmique ou électrique. Les manoeuvres peuvent également être réalisées par une combinaison des deux types de moyens de propulsion. Dans le cas où une combinaison de deux types de moyens de propulsion est utilisée sur le premier ou le deuxième engin orbiteur, il est possible de segmenter cet engin orbiteur en séparant, après usage, l'un des moyens de propulsion usagé, par exemple un étage de propulsion électrique, avant d'effectuer la manoeuvre suivante, de façon à supprimer de la masse inutile avant de réaliser la manoeuvre suivante.
De même, pour toute trajectoire envisagée pour chacun des deux engins orbiteurs, il est possible d'ajouter en outre des manoeuvres d'assistance gravitationnelle utilisant la Terre, la planète cible, et/ou toute planète ou lune intermédiaire utilisable sur ladite trajectoire, y compris en modifiant cette dernière de façon à volontairement croiser la planète utilisée pour l'assistance.

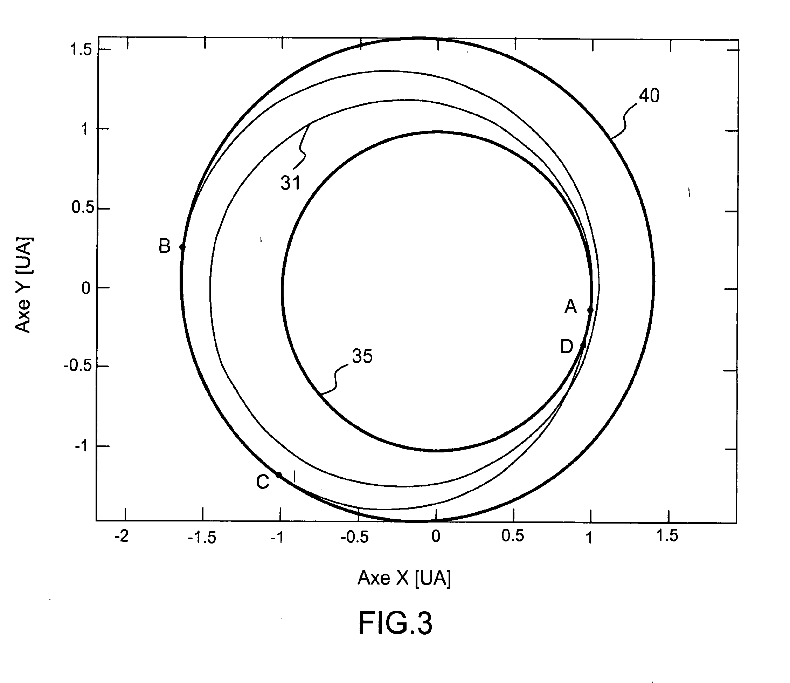

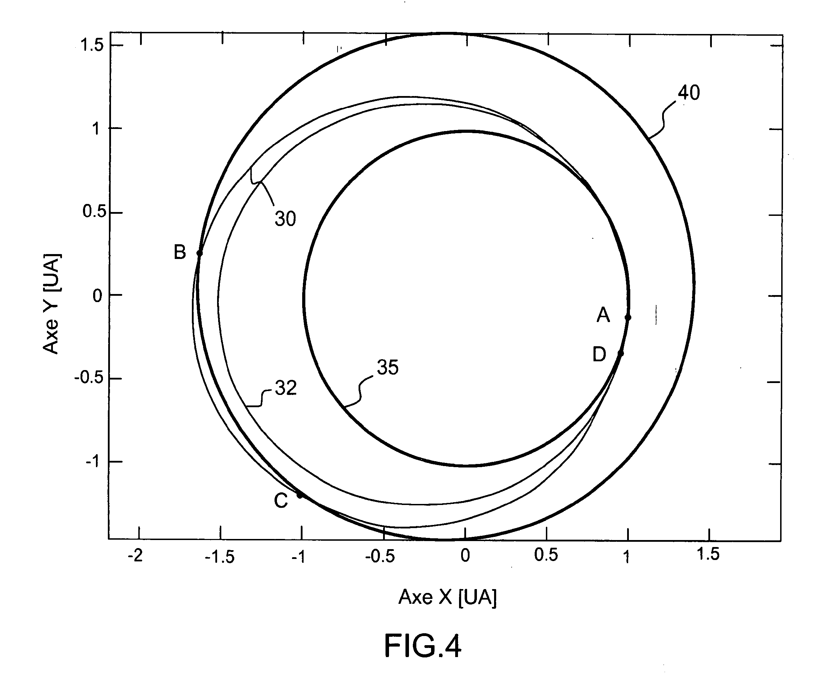

Les figures 3 et 4 montrent des premiers exemples de trajectoires du premier, respectivement du deuxième engin spatial orbiteur, dans le plan écliptique XY, les échelles étant en unités astronomiques. Les trajectoires de la Terre et de Mars, 35, 40, sont représentées en traits épaissis. Les deux engins orbiteurs 1, 2 sont lancés indépendamment l'un de l'autre, sur deux trajectoires interplanétaires différentes, 31, 32, par exemple le même jour, par exemple le 15 septembre 2015 du même endroit A de la Terre et en direction de Mars. Le premier engin orbiteur 1 se met en orbite autour de Mars, au point B, par exemple le 15 novembre 2017, alors que le deuxième engin orbiteur 2 évolue sur une deuxième trajectoire interplanétaire 32 localisée entre les deux planètes Terre et Mars vers un lieu de rendez-vous prédéterminé. Dans l'exemple représenté sur la figure 4, le lieu de rendez-vous est situé sur une orbite de rencontre interplanétaire 30 qui passe à proximité des orbites des deux planètes, mais ce n'est pas indispensable. A une date prédéterminée correspondant au passage du deuxième engin orbiteur à proximité du premier engin orbiteur, par exemple le 15 mars 2018, le premier engin orbiteur 1 quitte l'orbite de Mars au point C et rejoint le deuxième engin orbiteur sur le lieu de rendez-vous, par exemple le même jour, sur l'orbite de rencontre interplanétaire 30. Les deux engins orbiteurs sont alors amarrés ensembles et les deux engins amarrés retournent sur Terre où ils arrivent en un endroit D, par exemple le 27 août 2018. Alternativement, après l'amarrage des deux engins, les échantillons prélevés et/ou les passagers sont transférés du premier engin orbiteur dans le deuxième engin orbiteur, puis les deux engins orbiteurs sont désolidarisés et seul le deuxième engin orbiteur et son chargement revient en orbite terrestre.

Les figures 3 et 4 ne sont que des exemples non limitatifs de trajectoires. La stratégie de départ de la Terre ou de la planète cible peut être différente. Notamment, par exemple, les engins orbiteurs peuvent être placés directement sur leur trajectoire vers la planète de destination ou être préalablement placés sur une ou plusieurs orbites intermédiaires.

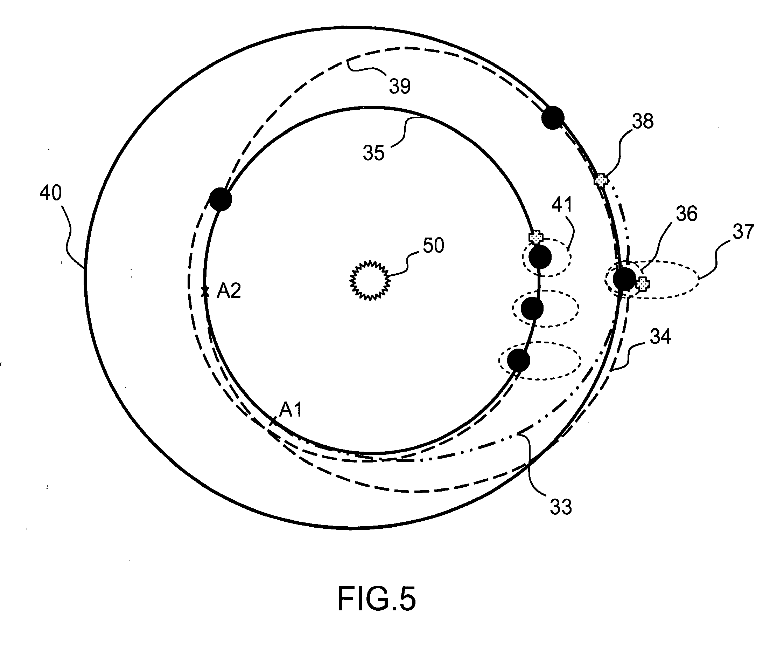

La figure 5 représente un deuxième exemple de trajectoires des deux engins spatiaux orbiteurs utilisant des manoeuvres d'assistance gravitationnelle pour accélérer ou freiner les engins spatiaux, ce qui permet de diminuer encore la masse de carburant nécessaire à l'accomplissement de la mission des deux engins orbiteurs. Une manoeuvre d'assistance gravitationnelle est un échange de quantité de mouvement entre une planète et un engin spatial.

Sur la figure 5, sont représentés l'orbite 35 de la Terre autour du Soleil 50, l'orbite 40 de la planète cible autour du Soleil 50, et un exemple d'évolution de trajectoires, pour chacun des deux engins spatiaux orbiteurs 1, 2. Le premier engin orbiteur 1 est lancé de la Terre, du point A1, sur une première trajectoire 33 autour du Soleil 50 en direction de la planète cible, par exemple Mars. A l'arrivée sur Mars, Le premier engin orbiteur 1 est mis en orbite 37 autour de Mars. Par freinage atmosphérique ou propulsif, le premier engin orbiteur 1 descend ensuite sur une orbite plus basse 36 pour récupérer un chargement par l'intermédiaire d'une fusée ou d'une navette spatiale locale. Le deuxième engin orbiteur 2, indépendant du premier engin orbiteur 1, est lancé de la Terre, du point A2, sur une seconde trajectoire 34 autour du Soleil 50, différente de la première trajectoire 33. La seconde trajectoire 34 va de l'orbite terrestre 35 à une orbite 42, proche de celle de Mars, sur laquelle est situé le lieu de rendez-vous 38. A l'approche de Mars, le deuxième engin orbiteur 2 est mis sur l'orbite 42 autour du Soleil, par exemple, en utilisant une première manoeuvre d'assistance gravitationnelle de Mars, accélérant le deuxième engin orbiteur 2 et modifiant sa trajectoire de façon adéquate. Lorsque le chargement du premier engin orbiteur 1 est terminé, Le premier engin orbiteur 1 peut rejoindre le lieu de rendez-vous avec un niveau de carburant juste suffisant pour quitter l'orbite de Mars. Lorsque le premier engin orbiteur 1 rejoint le deuxième engin orbiteur 2 sur le lieu de rendez-vous 38, un échange de chargement du premier engin orbiteur 1 vers le deuxième engin orbiteur 2 ou l'assemblage des deux engins orbiteurs 1, 2, est réalisé. L'orbiteur 2 peut ensuite effectuer une deuxième séquence de manoeuvres de changement d'orbite de faible intensité donc consommant peu de carburant, pour faire une seconde assistance gravitationnelle avec Mars et ainsi être injecté sur une orbite de transfert 39 allant de Mars à la Terre. A l'approche de l'orbite terrestre, une troisième séquence d'assistances gravitationnelles avec la Terre permet de réduire l'énergie de cette orbite de transfert 39 et de réduire la quantité de carburant nécessaire à la manoeuvre orbitale pour transférer le deuxième engin orbiteur 2 sur une orbite 41 autour de la Terre. Pour minimiser la masse de carburant nécessaire, le deuxième engin orbiteur 2 est injecté préférentiellement sur une orbite 41 très elliptique, l'orbite pouvant être ensuite progressivement rendue quasiment circulaire lorsque le deuxième engin orbiteur ne se trouve plus qu'à quelques centaines de kilomètres d'altitude, par exemple de l'ordre de 400 km d'altitude, en utilisant une technique connue de freinage atmosphérique. La technique de freinage atmosphérique permet, en abaissant le périgée dans la haute atmosphère terrestre, de dissiper l'énergie orbitale de l'engin spatial et de faire décroître l'apogée en consommant une masse de carburant très faible. Le chargement peut enfin être transféré sur un troisième engin spatial, placé par exemple en orbite terrestre, tel que par exemple une station spatiale, par exemple la station spatiale internationale ISS, une fusée, une navette spatiale ou un autre type de véhicule habité capable d'effectuer une rentrée terrestre, ou mis dans une capsule automatique de rentrée atmosphérique qui retournera se poser sur Terre. Si le chargement est constitué d'échantillons soumis à des restrictions de protection planétaires, le retour via un véhicule habité est préféré.

Bien que l'invention ait été décrite en relation avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé pour alléger la masse de carburant embarquée lors d'une mission interplanétaire, **caractérisé en ce qu'**il consiste :
- à lancer (10a) un premier engin spatial orbiteur (1) de la Terre sur une première trajectoire interplanétaire (31, 33) vers une planète cible à explorer,
- à lancer (10b) un deuxième engin spatial orbiteur (2) de la Terre sur une deuxième trajectoire interplanétaire (32, 34) vers un lieu de rendez-vous (38), la deuxième trajectoire interplanétaire ne comportant pas de phase de mise en orbite autour de la planète cible,
- à récupérer un chargement à transporter et à le charger sur le premier engin spatial orbiteur (1),
- à faire revenir le premier engin spatial orbiteur (1) et le chargement de la planète cible jusqu'au lieu de rendez-vous (38)
- à établir un accostage (14) des deux engins spatiaux orbiteurs (1, 2),
- à faire revenir au moins le deuxième engin spatial orbiteur (2) et le chargement, du lieu de rendez-vous (38) jusqu'à une orbite terrestre (41).

2. Procédé selon la revendication 1, **caractérisé en ce que**, le premier engin spatial orbiteur (1) comporte, lors de son lancement de la Terre, une masse de carburant correspondant uniquement à la masse nécessaire à l'accomplissement d'une première partie de la mission qui se termine au lieu de rendez-vous (38), au moment de l'accostage (14).

3. Procédé selon la revendication 2, **caractérisé en ce que** le deuxième engin spatial orbiteur (2) comporte une masse de carburant lui permettant de prendre le relais du premier engin spatial orbiteur (1) à partir de l'accostage (14) et de terminer la mission du lieu de rendez-vous (38) jusqu'au retour en orbite terrestre (41).

4. Procédé selon l'une des revendications 1 à 3, **caractérisé en ce qu'**il consiste en outre à utiliser au moins une assistance gravitationnelle d'une planète ou d'une lune située sur la deuxième trajectoire interplanétaire (32, 34) pour diminuer encore la masse de carburant nécessaire à l'accomplissement de la mission.

5. Procédé selon l'une des revendications 1 à 4, **caractérisé en ce qu'**il consiste, après la phase d'accostage (14), à faire revenir les deux engins spatiaux orbiteurs amarrés ensembles jusqu'à l'orbite terrestre (41).

6. Procédé selon la revendication 5, **caractérisé en ce qu'**il consiste à placer, sur le deuxième engin spatial orbiteur (2), la masse de carburant nécessaire pour le retour des deux engins spatiaux orbiteurs (1,2) du lieu de rendez-vous (38) jusqu'à l'orbite terrestre (41).

7. Procédé selon l'une des revendications 1 à 4, **caractérisé en ce qu'**il consiste en outre, après la phase d'accostage (14), à décharger le chargement du premier engin spatial orbiteur (1) dans le deuxième engin spatial orbiteur (2), puis à abandonner le premier engin spatial orbiteur (1).

8. Procédé selon l'une des revendications 1 à 7, **caractérisé en ce qu'**il consiste à récupérer le chargement par l'intermédiaire d'une première fusée ou d'une première navette spatiale lancée de la planète cible vers le premier engin spatial orbiteur (1) et à laisser le premier engin spatial orbiteur (1) en orbite autour de la planète cible pendant la récupération du chargement.

9. Procédé selon l'une des revendications 1 à 8, **caractérisé en ce qu'**il consiste en outre à décharger le chargement par l'intermédiaire d'un troisième engin spatial, choisi parmi une station spatiale, une deuxième fusée, ou une deuxième navette spatiale lancée de la Terre vers le deuxième engin spatial (2) et à laisser le deuxième engin spatial (2), ou les deux engins spatiaux orbiteurs (1,2) amarrés, sur l'orbite (41) autour de la Terre.

10. Procédé selon l'une des revendications 1 à 9, **caractérisé en ce que** le lieu de rendez-vous (38) est localisé sur une orbite de rencontre (30, 37) située entre la planète cible et la Terre.

11. Procédé selon l'une des revendications 1 à 10, **caractérisé en ce que** le chargement est constitué des passagers et/ou par des échantillons de matières prélevés sur la planète cible.

## Claims

1. A method for reducing the fuel mass that is boarded during an interplanetary mission, **characterised in that** it comprises:
- launching (10a) a first spacecraft (1) for orbiting the earth on a first interplanetary trajectory (31, 33) towards a target planet that is to be explored,
- launching (10b) a second spacecraft (2) for orbiting the earth on a second interplanetary trajectory (32, 34) towards a rendezvous point (38), said second interplanetary trajectory not including a phase of orbiting the target planet,
- recovering a load to be transported and loading said load onto the first orbiter spacecraft (1),
- effecting the return of the first orbiter spacecraft (1) and the load from the target planet to the rendezvous point (38),
- docking (14) the two orbiter spacecraft (1, 2) to each other,
- effecting the return of at least the second orbiter spacecraft (2) and the load from the rendezvous point (38) to an earth orbit (41).

2. The method according to claim 1, **characterised in that** the first orbiter spacecraft (1) includes, at the time of its launch from the earth, a fuel mass that only corresponds to the fuel mass that is required to complete a first part of the mission that terminates at the rendezvous point (38) at the time of docking (14).

3. The method according to claim 2, **characterised in that** the second orbiter spacecraft (2) includes a fuel mass that allows it to take over from the first orbiter spacecraft (1) from the time of docking (14) and to complete the mission from the rendezvous point (38) until the return to an earth orbit (41).

4. The method according to any one of claims 1 to 3, **characterised in that** it further comprises at least the use of the gravity assistance of a planet or a moon located in the second interplanetary trajectory (32, 34) in order to further reduce the fuel mass that is required to complete the mission.

5. The method according to any one of claims 1 to 4, **characterised in that** it comprises, after the docking phase (14), effecting the return of the two docked orbiter spacecraft to an earth orbit (41).

6. The method according to claim 5, **characterised in that** it comprises placing the fuel mass that is required for returning the two orbiter spacecraft (1, 2) from the rendezvous point (38) to an earth orbit (41) on the second orbiter spacecraft (2).

7. The method according to any one of claims 1 to 4, **characterised in that** it further comprises, after the docking phase (14), unloading the load from the first orbiter spacecraft (1) into the second orbiter spacecraft (2) and then abandoning the first orbiter spacecraft (1).

8. The method according to any one of claims 1 to 7, **characterised in that** it comprises recovering the load by means of a first rocket or a first space shuttle that is launched from the target planet to the first orbiter spacecraft (1) and leaving the first orbiter spacecraft (1) in orbit around the target planet whilst the load is being recovered.

9. The method according to any one of claims 1 to 8, **characterised in that** it further comprises unloading the load by means of a third spacecraft, selected from a space station, a second rocket or a second space shuttle that is launched from the earth to the second spacecraft (2) and leaving the second spacecraft (2) or the two docked orbiter spacecraft (1, 2) in orbit (41) around the earth.

10. The method according to any one of claims 1 to 9, **characterised in that** the rendezvous point (38) is located on an encounter orbit (30, 37) that is located between the target planet and the earth.

11. The method according to any one of claims 1 to 10, **characterised in that** the load is constituted by passengers and/or samples of materials taken from the target planet.

## Patentansprüche

1. Verfahren zum Verringern der für eine interplanetare Mission mitgeführten Treibstoffmasse, **dadurch gekennzeichnet, dass** es Folgendes beinhaltet:
- Schießen (10a) eines ersten Raumfahrzeugs (1) in eine Erdumlaufbahn auf einer ersten interplanetaren Flugbahn (31, 33) zu einem Zielplaneten, der erforscht werden soll,
- Schießen (10b) eines zweiten Raumfahrzeugs (1) in eine Erdumlaufbahn auf einer zweiten interplanetaren Flugbahn (32, 34) zu einer Treffpunkt-Stelle (38), wobei die zweite interplanetare Flugbahn keine Phase der Umrundung des Zielplaneten hat,
- Aufnehmen einer zu transportierenden Ladung und Laden der Ladung auf das erste Orbiter-Raumfahrzeug (1),
- Zurückführen des ersten Orbiter-Raumfahrzeugs (1) und der Ladung von dem Zielplaneten zu der Treffpunkt-Stelle (38),
- Andocken (14) der beiden Orbiter-Raumfahrzeuge (1, 2) aneinander,
- Zurückführen wenigstens des zweiten Orbiter-Raumfahrzeugs (2) und der Ladung von der Treffpunkt-Stelle (38) zu einer Erdumlaufbahn (41).

2. Verfahren nach Anspruch 1, **dadurch gekennzeichnet, dass** das erste Orbiter-Raumfahrzeug (1) bei seinem Abschuss von der Erde eine Treibstoffmasse mitführt, die nur der Treibstoffinasse entspricht, die zum Vollenden eines ersten Teils der Mission nötig ist, die an der Treffpunkt-Stelle (38) zum Zeitpunkt des Andockens (14) endet.

3. Verfahren nach Anspruch 2, **dadurch gekennzeichnet, dass** das zweite Orbiter-Raumfahrzeug (2) eine Treibstoffmasse aufweist, die es ihm gestattet, das erste Orbiter-Raumfahrzeug (1) ab dem Andocken (14) abzulösen und die Mission von der Treffpunkt-Stelle (38) bis zur Rückkehr in eine Erdumlaufbahn (41) zu vollenden.

4. Verfahren nach einem der Ansprüche 1 bis 3, **dadurch gekennzeichnet, dass** es ferner wenigstens eine Gravitationsunterstützung eines Planeten oder eines Mondes nutzt, der sich in der zweiten interplanetaren Flugbahn (32, 34) befindet, um die Treibstoffmasse weiter zu reduzieren, die zum Vollenden der Mission nötig ist.

5. Verfahren nach einem der Ansprüche 1 bis 4, **dadurch gekennzeichnet, dass** es nach der Andockphase (14) das Zurückführen der beiden aneinander festgemachten Orbiter-Raumfahrzeuge in die Erdumlaufbahn (41) beinhaltet.

6. Verfahren nach Anspruch 5, **dadurch gekennzeichnet, dass** es das Platzieren der Treibstoffmasse, die zum Zurückführen der beiden Orbiter-Raumfahrzeuge (1, 2) von der Treffpunkt-Stelle (38) zu der Erdumlaufbahn (41) nötig ist, auf dem zweiten Orbiter-Raumfahrzeug (2) beinhaltet.

7. Verfahren nach einem der Ansprüche 1 bis 4, **dadurch gekennzeichnet, dass** es ferner, nach der Andockphase (14), das Abladen der Ladung von dem ersten Orbiter-Raumfahrzeug (1) in das zweite Orbiter-Raumfahrzeug (2) und dann das Zurücklassen des ersten Orbiter-Raumfahrzeugs (1) beinhaltet.

8. Verfahren nach einem der Ansprüche 1 bis 7, **dadurch gekennzeichnet, dass** es das Wiederaufnehmen der Ladung mittels einer ersten Rakete oder einer ersten Raumfähre, die von dem Zielplaneten zu dem ersten Orbiter-Raumfahrzeug (1) geschossen wird, und das Halten des ersten Orbiter-Raumfahrzeugs (1) in der Umlaufbahn um den Zielplaneten beinhaltet, während die Ladung aufgenommen wird.

9. Verfahren nach einem der Ansprüche 1 bis 8, **dadurch gekennzeichnet, dass** es ferner das Abladen der Ladung mittels eines dritten Raumfahrzeugs, ausgewählt von einer Raumstation, einer zweiten Rakete oder einer zweiten Raumfähre, die von der Erde zu dem zweiten Raumfahrzeug (2) geschossen wird, und das Halten des zweiten Raumfahrzeugs (2) oder der beiden aneinander festgemachten Orbiter-Raumfahrzeuge (1, 2) in der Erdumlaufbahn (41) beinhaltet.

10. Verfahren nach einem der Ansprüche 1 bis 9, **dadurch gekennzeichnet, dass** die Treffpunkt-Stelle (38) auf einer Begegnungsbahn (30, 37) zwischen dem Zielplaneten und der Erde liegt.

11. Verfahren nach einem der Ansprüche 1 bis 10, **dadurch gekennzeichnet, dass** die Ladung aus Passagieren und/oder vom Zielplaneten genommenen Materialproben besteht.
